# EUROPEAN PATENT APPLICATION

(11) **EP 4 527 677 A1**
(43) Date of publication of application: **26.03.2025**
(21) Application number: 24187276.1
(22) Date of filing: 09.07.2024
(51) Int. Cl.: B60L 53/12, B60L 53/36, B60L 53/66, B60L 53/68, B60L 53/126, B60L 53/63

(54) **APPARATUS AND METHOD FOR CONTROLLING WIRELESS CHARGING**

(30) Priority: 20.09.2023 KR 20230125746
(71) Applicant: Hyundai Mobis Co., Ltd., Gangnam-gu Seoul 06141 (KR)
(72) Inventor: SON, Dae Gon, 07030 Seoul (KR)
(74) Representative: Frenkel, Matthias Alexander

(57) **Abstract**

An apparatus for controlling wireless charging, and a method therefor are provided. The apparatus includes a transceiver to communicate with a power grid, one or more vehicles, or a combination thereof, and a controller to control the transceiver, obtain information on available power and information on estimated power consumption per unit section required for wireless charging, calculate accommodatable number of wireless charging vehicles per unit section based on the obtained information; and control wireless charging vehicles to move to the unit section for wireless charging while driving according to the calculated accommodatable number of wireless charging vehicle.

## Description

### BACKGROUND

### 1. Field

The embodiments of the present disclosure relate to a control apparatus for wireless charging and a method for the same, and more particularly to an apparatus and method for controlling the entry of a vehicle that desires to be wirelessly charged with electricity within an area in which such wireless charging of the vehicle can be performed.

### 2. Description of the Related Art

As technology of electric vehicles and technology of autonomous driving have rapidly developed, it is expected that various occupants (hereinafter referred to as "users") will be able to engage in various activities within the vehicle. For example, a user may be a fallback-ready user (FRU) and thus be able to watch video or moving images or participate in video conferences, as long as he or she remains aware of the vehicle's surroundings and can be ready for fallback.

With the advent of the autonomous driving era, various sensors are being installed within vehicles. For example, cameras, microphone sensors, and heat detection sensors may be installed to check objects within the vehicle.

It is expected that infrastructure will be introduced to enable wireless charging of autonomous driving vehicles while driving through various sensors, wireless communication devices, or the like.

Within the above-described environment, it is expected that there will be a need for ways to provide methods for controlling the vehicle to enter or exit an area for wireless charging.

### SUMMARY

This Summary is provided to introduce a selection of concepts in simplified form that are further described below in the Detailed Description. This Summary is not intended to identify key features or essential features of the claimed subject matter, nor is it intended to be used as an aid in determining the scope of the claimed subject matter.

An object of the present disclosure is to provide a vehicle control device for wireless charging and a method for the same.

Another object of the present disclosure is to provide an apparatus and method for controlling a vehicle to enter and/or exit an area (e.g., a specific lane on a road) for wireless charging.

Technical subjects to be solved by the present disclosure are not limited to the above-mentioned technical solutions, and it should be noted that other technical subjects not described above can be understood by those skilled in the art from the description of the present disclosure below.

In a general aspect of the disclosure, an apparatus for controlling wireless charging, includes: a transceiver configured to communicate with a power grid, one or more vehicles, or a combination thereof; and a controller configured to: control the transceiver; obtain information on available power and information on estimated power consumption per unit section required for wireless charging; calculate accommodatable number of wireless charging vehicles per unit section based on the obtained information; and control wireless charging vehicles to move to the unit section for wireless charging while driving according to the calculated accommodatable number of wireless charging vehicle.

In another general aspect of the disclosure, a method for controlling wireless charging, includes: obtaining information on available power and information on estimated power consumption per unit section for wireless charging; calculating accommodatable number of wireless charging vehicles per unit section based on the obtained information; and controlling wireless charging vehicles to move to the unit section for wireless charging while driving according to the calculated accommodatable number of wireless charging vehicle.

In yet another general aspect of the disclosure, an apparatus for controlling wireless charging, includes: a transceiver configured to communicate with a power grid or a vehicle; and a controller configured to: control the transceiver; receive a wireless charging request message from a first vehicle that has entered a wireless charging section; in response to a reception of the wireless charging request message, determine whether to accommodate the first vehicle in an unit section that provides wireless charging while driving; and transmit a wireless charging acceptance message to the first vehicle according to a determination to accommodate the first vehicle in the unit section.

The unit section for wireless charging may include any one of a specific lane in a road where wireless charging is provided and a section having a preset length in the road.

In response to a determination not to accommodate the first vehicle in the unit section, the controller may be further configured to: select a second vehicle among at least one vehicle based on a battery charging state of the at least one vehicle being wirelessly charged in the unit section; and transmit a wireless charging termination request message to the second vehicle.

The controller may be further configured to select a second vehicle based on a priority criterion, and the priority criterion may be determined based on at least one of a battery charging state of the vehicle, a scheduled driving route of the vehicle, a residual route of the vehicle, a wireless charging rating assigned to the vehicle, or any combination thereof.

The controller may be further configured to: upon receiving a wireless charging termination acceptance message from the second vehicle, terminate a wireless charging session with the second vehicle; and control the transceiver to transmit the wireless charging acceptance message to the first vehicle.

In yet another general aspect of the disclosure, an apparatus for controlling wireless charging, includes: a transceiver configured to transmit and receive a message to and from a wireless charging management apparatus or a wireless charging management system; and a controller configured to: control the transceiver to receive a wireless charging termination request message while the vehicle is driving in a unit section for wireless charging; determine whether to terminate the wireless charging in response to the received wireless charging termination request message; and control the transceiver to transmit a wireless charging termination acceptance message based on a determination to terminate the wireless charging.

The controller may be further configured to determine whether to terminate the wireless charging based on a priority criterion, and the priority criterion may be determined based on at least one of a battery charge state of a vehicle, a scheduled driving route of the vehicle, a residual route of the vehicle, a wireless charging rating assigned to the vehicle, or any combination thereof.

After the transmission of the wireless charging termination acceptance message, the controller may be further configured to control the vehicle to deviate from the unit section.

The wireless charging management system may include: a vehicle including a rechargeable battery; a wireless charger including a plurality of wireless transmission coils buried under a road; a power grid connected to the wireless charger; and a wireless charging management server configured to wirelessly charge the rechargeable battery of the vehicle while the vehicle is driving on the road.

The power grid may include at least one of a power transmission system, a power distribution system, a power generation system, of any combination thereof, wherein the power grid may be configured to supply power to the wireless charger.

The unit section may include any one of a specific lane in the road where wireless charging is provided and a section having a preset length in the road.

It is to be understood that both the foregoing general description and the following detailed description of the present disclosure are exemplary and explanatory and are intended to provide further explanation of the disclosure as claimed.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure.
FIG. 1 is an overall block diagram illustrating an autonomous vehicle to which an autonomous driving apparatus can be applied.
FIG. 2 is a schematic diagram illustrating an example vehicle to which an autonomous driving apparatus is applied.
FIG. 3 is a schematic diagram illustrating a system for wireless charging.
FIG. 4 is a flowchart illustrating a method for controlling wireless charging of a vehicle according to the proposed technology.
FIG. 5 is a flowchart illustrating a method for controlling wireless charging of a vehicle according to the proposed technology.
FIG. 6 is a flowchart illustrating a method for controlling wireless charging of a vehicle according to the proposed technology.
FIG. 7 is a flowchart illustrating a method for controlling wireless charging of a vehicle according to the proposed technology.

### DETAILED DESCRIPTION

Hereinafter, embodiments of the present disclosure will be described in detail with reference to the accompanying drawings so that the present disclosure may be easily realized by those skilled in the art. However, the present disclosure may be achieved in various different forms and is not limited to the embodiments described herein. In the drawings, parts that are not related to a description of the present disclosure are omitted to clearly explain the present disclosure and similar reference numbers will be used throughout this specification to refer to similar parts.

In the specification, when a part "includes" an element, it means that the part may further include another element rather than excluding another element unless otherwise mentioned.

In addition, in the specification, "passenger", "driver", "user", etc. are mentioned for description of the present disclosure, and may be used interchangeably therewith.

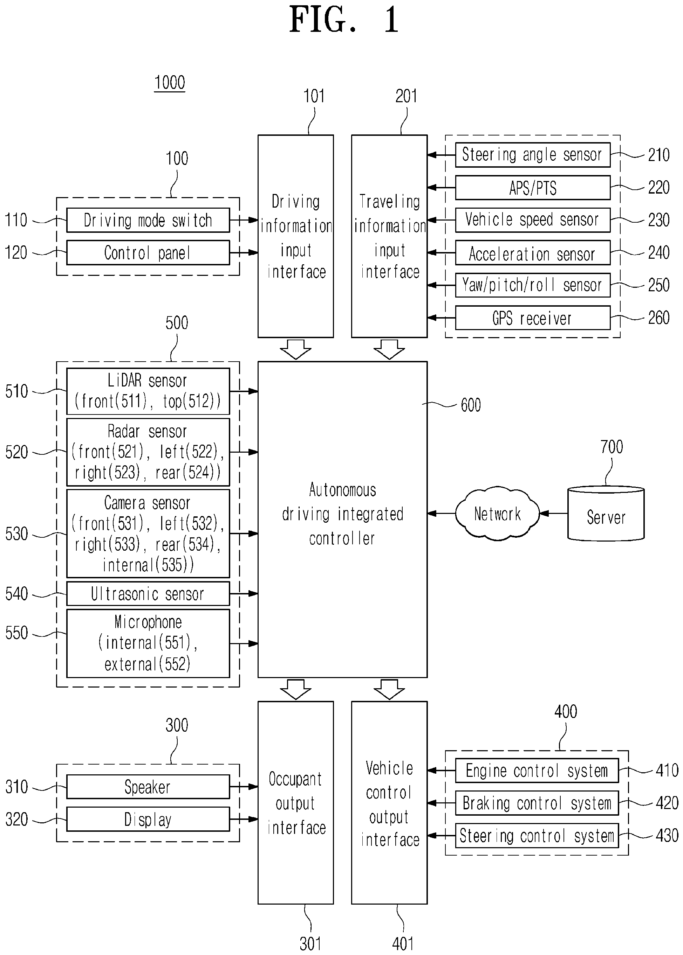

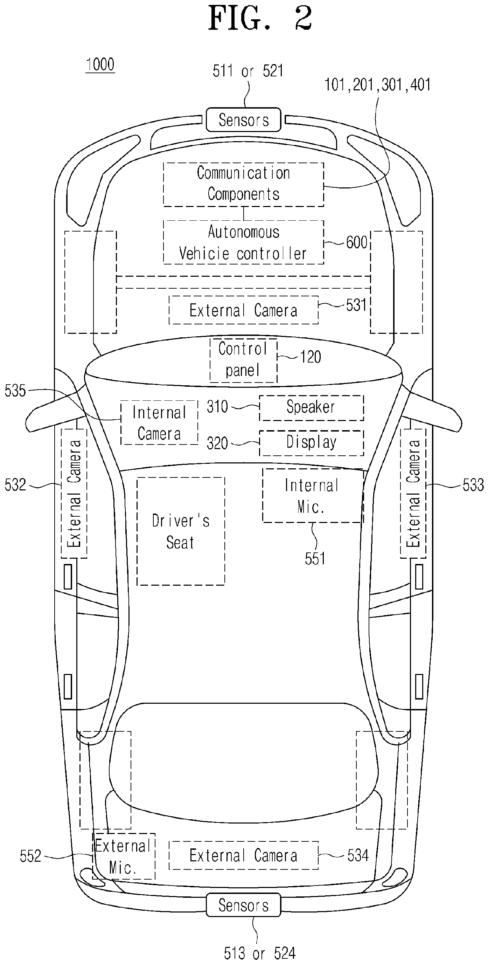

FIG. 1 is an overall block diagram of an autonomous driving control system to which an autonomous driving apparatus according to any one of embodiments of the present disclosure is applicable. FIG. 2 is a diagram illustrating an example in which an autonomous driving apparatus according to any one of embodiments of the present disclosure is applied to a vehicle.

First, a structure and function of an autonomous driving control system (e.g., an autonomous driving vehicle) to which an autonomous driving apparatus according to the present embodiments is applicable will be described with reference to FIGS. 1 and 2.

As illustrated in FIG. 1, an autonomous driving vehicle 1000 may be implemented based on an autonomous driving integrated controller 600 that transmits and receives data necessary for autonomous driving control of a vehicle through a driving information input interface 101, a traveling information input interface 201, an occupant output interface 301, a vehicle control output interface 401, and a network via a server 700. However, the autonomous driving integrated controller 600 may also be referred to herein as a controller, a processor, or, simply, a controller.

The autonomous driving integrated controller 600 may obtain, through the driving information input interface 101, driving information based on manipulation of an occupant for a user input unit 100 in an autonomous driving mode or manual driving mode of a vehicle. As illustrated in FIG. 1, the user input unit 100 may include a driving mode switch 110 and a control panel 120 (e.g., a navigation terminal mounted on the vehicle or a smartphone or tablet computer owned by the occupant). Accordingly, driving information may include driving mode information and navigation information of a vehicle.

For example, a driving mode (i.e., an autonomous driving mode/manual driving mode or a sports mode/eco mode/safety mode/normal mode) of the vehicle determined by manipulation of the occupant for the driving mode switch 110 may be transmitted to the autonomous driving integrated controller 600 through the driving information input interface 101 as the driving information.

Furthermore, navigation information, such as the destination of the occupant input through the control panel 120 and a path up to the destination (e.g., the shortest path or preference path, selected by the occupant, among candidate paths up to the destination), may be transmitted to the autonomous driving integrated controller 600 through the driving information input interface 101 as the driving information.

The control panel 120 may be implemented as a touchscreen panel that provides a user interface (UI) through which the occupant inputs or modifies information for autonomous driving control of the vehicle. In this case, the driving mode switch 110 may be implemented as touch buttons on the control panel 120.

In addition, the autonomous driving integrated controller 600 may obtain traveling information indicative of a driving state of the vehicle through the traveling information input interface 201. The traveling information may include a steering angle formed when the occupant manipulates a steering wheel, an accelerator pedal stroke or brake pedal stroke formed when the occupant depresses an accelerator pedal or brake pedal, and various types of information indicative of driving states and behaviors of the vehicle, such as a vehicle speed, acceleration, a yaw, a pitch, and a roll formed in the vehicle. The traveling information may be detected by a traveling information detection unit 200, including a steering angle sensor 210, an accelerator position sensor (APS)/pedal travel sensor (PTS) 220, a vehicle speed sensor 230, an acceleration sensor 240, and a yaw/pitch/roll sensor 250, as illustrated in FIG. 1.

Furthermore, the traveling information of the vehicle may include location information of the vehicle. The location information of the vehicle may be obtained through a global positioning system (GPS) receiver 260 applied to the vehicle. Such traveling information may be transmitted to the autonomous driving integrated controller 600 through the traveling information input interface 201 and may be used to control the driving of the vehicle in the autonomous driving mode or manual driving mode of the vehicle.

The autonomous driving integrated controller 600 may transmit driving state information provided to the occupant to an output unit 300 through the occupant output interface 301 in the autonomous driving mode or manual driving mode of the vehicle. That is, the autonomous driving integrated controller 600 transmits the driving state information of the vehicle to the output unit 300 so that the occupant may check the autonomous driving state or manual driving state of the vehicle based on the driving state information output through the output unit 300. The driving state information may include various types of information indicative of driving states of the vehicle, such as a current driving mode, transmission range, and speed of the vehicle.

If it is determined that it is necessary to warn a driver in the autonomous driving mode or manual driving mode of the vehicle along with the above driving state information, the autonomous driving integrated controller 600 transmits warning information to the output unit 300 through the occupant output interface 301 so that the output unit 300 may output a warning to the driver. In order to output such driving state information and warning information acoustically and visually, the output unit 300 may include a speaker 310 and a display 320 as illustrated in FIG. 1. In this case, the display 320 may be implemented as the same device as the control panel 120 or may be implemented as an independent device separated from the control panel 120.

Furthermore, the autonomous driving integrated controller 600 may transmit control information for driving control of the vehicle to a lower control system 400, applied to the vehicle, through the vehicle control output interface 401 in the autonomous driving mode or manual driving mode of the vehicle. As illustrated in FIG. 1, the lower control system 400 for driving control of the vehicle may include an engine control system 410, a braking control system 420, and a steering control system 430. The autonomous driving integrated controller 600 may transmit engine control information, braking control information, and steering control information, as the control information, to the respective lower control systems 410, 420, and 430 through the vehicle control output interface 401. Accordingly, the engine control system 410 may control the speed and acceleration of the vehicle by increasing or decreasing fuel supplied to an engine. The braking control system 420 may control the braking of the vehicle by controlling braking power of the vehicle. The steering control system 430 may control the steering of the vehicle through a steering device (e.g., motor driven power steering (MDPS) system) applied to the vehicle.

As described above, the autonomous driving integrated controller 600 according to the present embodiment may obtain the driving information based on manipulation of the driver and the traveling information indicative of the driving state of the vehicle through the driving information input interface 101 and the traveling information input interface 201, respectively, and transmit the driving state information and the warning information, generated based on an autonomous driving algorithm, to the output unit 300 through the occupant output interface 301. In addition, the autonomous driving integrated controller 600 may transmit the control information generated based on the autonomous driving algorithm to the lower control system 400 through the vehicle control output interface 401 so that driving control of the vehicle is performed.

In order to guarantee stable autonomous driving of the vehicle, it is necessary to continuously monitor the driving state of the vehicle by accurately measuring a driving environment of the vehicle and to control driving based on the measured driving environment. To this end, as illustrated in FIG. 1, the autonomous driving apparatus according to the present embodiment may include a sensor unit 500 for detecting a nearby object of the vehicle, such as a nearby vehicle, pedestrian, road, or fixed facility (e.g., a signal light, a signpost, a traffic sign, or a construction fence).

The sensor unit 500 may include one or more of a LiDAR sensor 510, a radar sensor 520, or a camera sensor 530, in order to detect a nearby object outside the vehicle, as illustrated in FIG. 1.

The LiDAR sensor 510 may transmit a laser signal to the periphery of the vehicle and detect a nearby object outside the vehicle by receiving a signal reflected and returning from a corresponding object. The LiDAR sensor 510 may detect a nearby object located within the ranges of a preset distance, a preset vertical field of view, and a preset horizontal field of view, which are predefined depending on specifications thereof. The LiDAR sensor 510 may include a front LiDAR sensor 511, a top LiDAR sensor 512, and a rear LiDAR sensor 513 installed at the front, top, and rear of the vehicle, respectively, but the installation location of each LiDAR sensor and the number of LiDAR sensors installed are not limited to a specific embodiment. A threshold for determining the validity of a laser signal reflected and returning from a corresponding object may be previously stored in a memory (not illustrated) of the autonomous driving integrated controller 600. The autonomous driving integrated controller 600 may determine a location (including a distance to a corresponding object), speed, and moving direction of the corresponding object using a method of measuring time taken for a laser signal, transmitted through the LiDAR sensor 510, to be reflected and returning from the corresponding object.

The radar sensor 520 may radiate electromagnetic waves around the vehicle and detect a nearby object outside the vehicle by receiving a signal reflected and returning from a corresponding object. The radar sensor 520 may detect a nearby object within the ranges of a preset distance, a preset vertical field of view, and a preset horizontal field of view, which are predefined depending on specifications thereof. The radar sensor 520 may include a front radar sensor 521, a left radar sensor 522, a right radar sensor 523, and a rear radar sensor 524 installed at the front, left, right, and rear of the vehicle, respectively, but the installation location of each radar sensor and the number of radar sensors installed are not limited to a specific embodiment. The autonomous driving integrated controller 600 may determine a location (including a distance to a corresponding object), speed, and moving direction of the corresponding object using a method of analyzing power of electromagnetic waves transmitted and received through the radar sensor 520.

The camera sensor 530 may detect a nearby object outside the vehicle by photographing the periphery of the vehicle and detect a nearby object within the ranges of a preset distance, a preset vertical field of view, and a preset horizontal field of view, which are predefined depending on specifications thereof.

The camera sensor 530 may include a front camera sensor 531, a left camera sensor 532, a right camera sensor 533, and a rear camera sensor 534 installed at the front, left, right, and rear of the vehicle, respectively, but the installation location of each camera sensor and the number of camera sensors installed are not limited to a specific embodiment. The autonomous driving integrated controller 600 may determine a location (including a distance to a corresponding object), speed, and moving direction of the corresponding object by applying predefined image processing to an image captured by the camera sensor 530.

In addition, an internal camera sensor 535 for capturing the inside of the vehicle may be mounted at a predetermined location (e.g., rear view mirror) within the vehicle. The autonomous driving integrated controller 600 may monitor a behavior and state of the occupant based on an image captured by the internal camera sensor 535 and output guidance or a warning to the occupant through the output unit 300.

As illustrated in FIG. 1, the sensor unit 500 may further include an ultrasonic sensor 540 in addition to the LiDAR sensor 510, the radar sensor 520, and the camera sensor 530 and further adopt various types of sensors for detecting a nearby object of the vehicle along with the sensors.

FIG. 2 illustrates an example in which, in order to aid in understanding the present embodiment, the front LiDAR sensor 511 or the front radar sensor 521 is installed at the front of the vehicle, the rear LiDAR sensor 513 or the rear radar sensor 524 is installed at the rear of the vehicle, and the front camera sensor 531, the left camera sensor 532, the right camera sensor 533, and the rear camera sensor 534 are installed at the front, left, right, and rear of the vehicle, respectively. However, as described above, the installation location of each sensor and the number of sensors installed are not limited to a specific embodiment.

Furthermore, in order to determine a state of the occupant within the vehicle, the sensor unit 500 may further include a bio sensor for detecting bio signals (e.g., heart rate, electrocardiogram, respiration, blood pressure, body temperature, electroencephalogram, photoplethysmography (or pulse wave), and blood sugar) of the occupant. The bio sensor may include a heart rate sensor, an electrocardiogram sensor, a respiration sensor, a blood pressure sensor, a body temperature sensor, an electroencephalogram sensor, a photoplethysmography sensor, and a blood sugar sensor.

Finally, the sensor unit 500 additionally includes a microphone 550 having an internal microphone 551 and an external microphone 552 used for different purposes.

The internal microphone 551 may be used, for example, to analyze the voice of the occupant in the autonomous driving vehicle 1000 based on AI or to immediately respond to a direct voice command of the occupant.

In contrast, the external microphone 552 may be used, for example, to appropriately respond to safe driving by analyzing various sounds generated from the outside of the autonomous driving vehicle 1000 using various analysis tools such as deep learning.

For reference, the symbols illustrated in FIG. 2 may perform the same or similar functions as those illustrated in FIG. 1. FIG. 2 illustrates in more detail a relative positional relationship of each component (based on the interior of the autonomous driving vehicle 1000) as compared with FIG. 1.

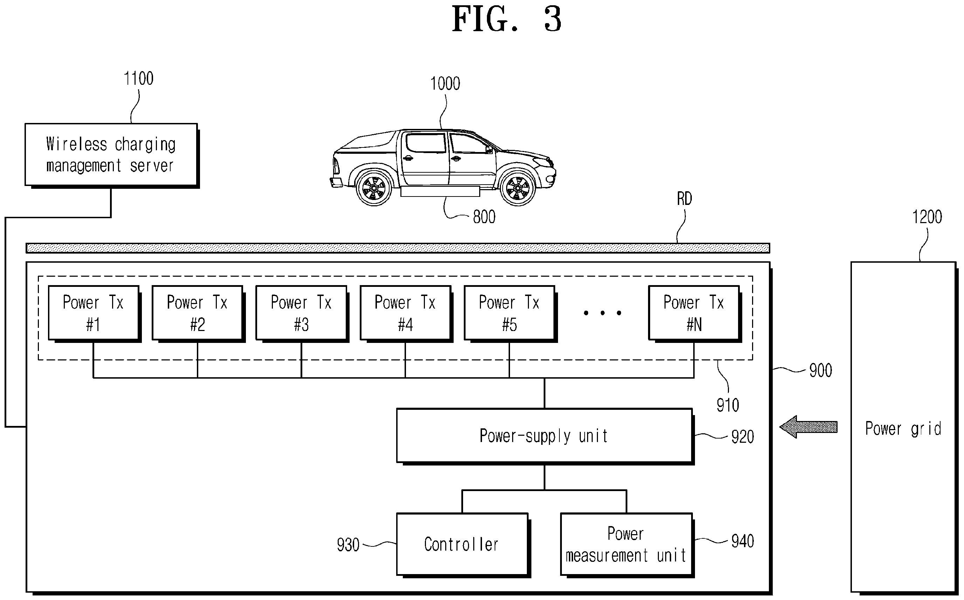

FIG. 3 is a schematic diagram illustrating a system for wireless charging during vehicle driving.

Referring to FIG. 3, the system may include a vehicle 1000 containing a rechargeable battery 800, a wireless charger 900, a wireless charging management server 1100, and a power grid 1200.

A plurality of wireless transmission coils 910 of the wireless charger 900 may be buried under a road (RD). Accordingly, the vehicle 1000 may perform wireless charging while driving on the road (RD).

The wireless charger 900 may include a power-supply unit 920 for supplying power to the wireless transmission coils 910, a controller 930 for controlling the power-supply unit, and a power measurement unit 940 for power measurement.

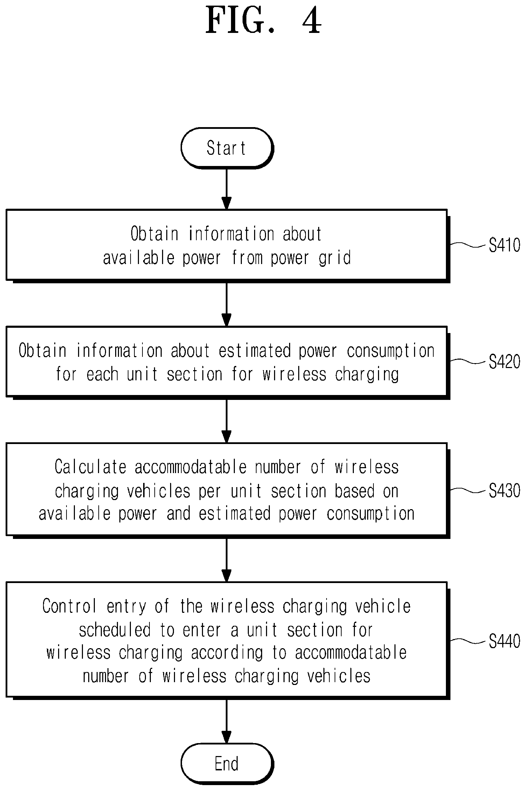

The wireless charging management server 1100 may manage the wireless charger 900, and may control initiation and termination of wireless charging of the vehicle 1000. The wireless charging management server 1100 will be described in detail with reference to FIGS. 4 to 6.

The power grid 1200 refers to a power system, for example, a power transmission system, a power distribution system, and a power generation system that can supply power to the wireless charger 900.

FIG. 4 is a flowchart illustrating a method for controlling wireless charging of a vehicle according to the proposed technology. The operation according to the flowchart of FIG. 4 may be performed by the wireless charging management server 1100 or components (e.g., a controller, a processor, etc.) of the wireless charging management server 1100, but is not limited thereto. The wireless charging management server 1100 may be integrated with the wireless charger 900. In this case, the operation according to the flowchart of FIG. 4 may be performed by the wireless charger 900 or the controller 930 of the wireless charger 900.

The wireless charging management server 1100 may include a transceiver for transmitting and receiving messages to and from the power grid or the vehicle; and a controller for controlling the transceiver.

The controller of the wireless charging management server 1100 may obtain information about available power from the power grid 1200 (S410).

Additionally, the controller of the wireless charging management server 1100 may obtain information about the estimated power consumption for each unit section required to provide the wireless charging service (S420). Information on the estimated power consumption per unit section required to provide the wireless charging service may be obtained from the wireless charger 900, or may be obtained by cooperating with the wireless charger 900.

The controller of the wireless charging management server 1100 may calculate the number of wireless charging vehicles that can be accommodated per unit section for wireless charging based on the available power and the calculated estimated power consumption (S430). Here, the unit section for wireless charging may include any one of a specific lane in a road where wireless charging is provided and a section of a preset length in the road.

The controller of the wireless charging management server 1100 may control entry of the wireless charging vehicle scheduled to enter a unit section for wireless charging according to the calculated number of wireless charging vehicles (S440). When the number of vehicles being wirelessly charged in the unit section for wireless charging is greater than or equal to the calculated number of wireless charging vehicles, the controller of the wireless charging management server 1100 may control the entry or exit of the vehicle that enters or exits the section for wireless charging. In a situation where the number of vehicles being wirelessly charged in the unit section for wireless charging is less than or equal to the calculated number of wireless charging vehicles, if there is a vehicle that desires to be wirelessly charged with electricity after entering the unit section for wireless charging, the controller of the wireless charging management server 1100 may allow the vehicle to enter the unit section.

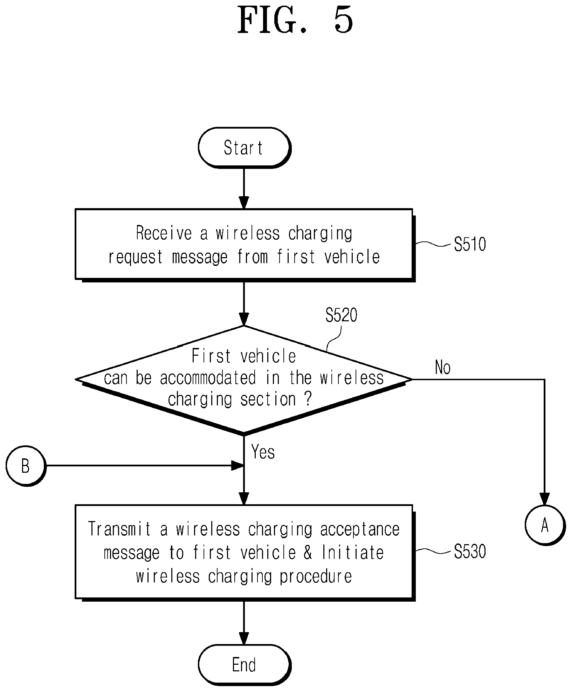

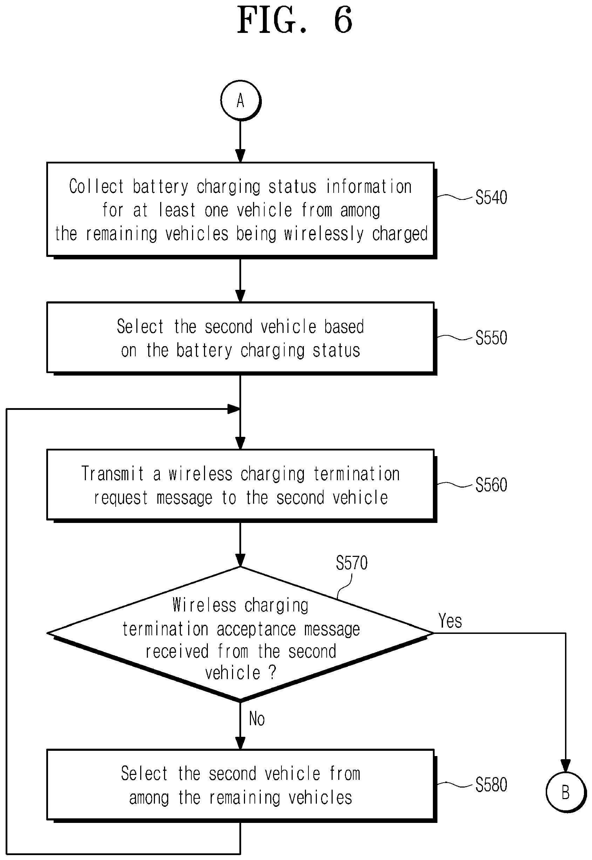

The above-described control operation for controlling the vehicle to enter or exit the unit section requisite for wireless charging will be described in more detail with reference to FIGS. 5 and 6.

FIG. 5 is a flowchart illustrating a method for controlling wireless charging of the vehicle according to the proposed technology. The operation according to the flowchart of FIG. 5 may be performed by the wireless charging management server 1100 or components (e.g., a controller, a processor, etc.) of the wireless charging management server 1100, but is not limited thereto. The wireless charging management server 1100 may be integrated with the wireless charger 900. In this case, the operation according to the flowchart of FIG. 5 may be performed by the wireless charger 900 or the controller 930 of the wireless charger 900.

The controller of the wireless charging management server 1100 may receive a wireless charging request message from the first vehicle that has entered the unit section for wireless charging (S510).

The controller of the wireless charging management server 1100 may determine whether or not to accommodate the first vehicle in the wireless charging section in response to the wireless charging request message (S520). More specifically, the controller of the wireless charging management server 1100 may determine whether the first vehicle can be accommodated in the wireless charging section in response to the wireless charging request message. This is to determine whether the wireless charging service can be provided to the first vehicle while driving in a unit section for wireless charging. The determining whether the first vehicle can be accommodated in the wireless charging section may be based on the number of wireless charging vehicles that can be accommodated per unit section for wireless charging. Here, the number of wireless charging vehicles can be calculated based on the available power described above and the calculated estimated power consumption.

The controller of the wireless charging management server 1100 may transmit a wireless charging acceptance message to the first vehicle based on the determination that the first vehicle can be accommodated in the wireless charging section (S530). Additionally, the controller of the wireless charging management server 1100 may initiate a wireless charging procedure with the first vehicle (S530).

The operations shown in FIG. 5 can also be explained from the perspective of the first vehicle.

The first vehicle may transmit a wireless charging request message to the wireless charging management server 1100 while entering the unit space for wireless charging. In response to the wireless charging request message, the first vehicle may receive a wireless charging acceptance message or a wireless charging rejection message. Upon receiving the wireless charging acceptance message, the first vehicle can initiate the wireless charging procedure.

Meanwhile, if it is determined that the first vehicle cannot be accommodated in the wireless charging section, the procedure may proceed with the procedures corresponding to the flowchart of FIG. 6. A detailed description thereof will be given with reference to FIG. 6.

The controller of the wireless charging management server 1100 may collect any one of battery charging status information for at least one vehicle from among the remaining vehicles being wirelessly charged in a unit section for wireless charging, a scheduled driving route of the at least one vehicle, a residual route of the at least one vehicle, and a wireless charging rating assigned to the at least one vehicle (S540).

The controller of the wireless charging management server 1100 may select the second vehicle from among the remaining vehicles according to a priority criterion based on at least one of the collected information (S550). Then, the controller of the wireless charging management server 1100 may transmit a wireless charging termination request message to the second vehicle (S560).

That is, the controller of the wireless charging management server 1100 may select one vehicle that is likely able to safely terminate such wireless charging, from among various vehicles being wireless charged with electricity while driving, and may transmit a wireless charging termination request to this selected vehicle. The second vehicle that has received the wireless charging termination request may determine whether wireless charging thereof may be terminated. If it is determined that wireless charging of the second vehicle may be terminated, the second vehicle may transmit a wireless charging termination acceptance message. Otherwise, the second vehicle may transmit a wireless charging termination rejection message.

The controller of the wireless charging management server 1100 may determine whether a wireless charging termination acceptance message has been received from the second vehicle or not (S570). If the wireless charging termination acceptance message has not been received, that is, if the wireless charging termination rejection message has been received, the controller of the wireless charging management server 1100 may select the second vehicle from among the remaining vehicles that are operating in the wireless charging mode in the same manner as described above (S580). Then, the controller of the wireless charging management server 1100 may re-perform the procedures S560 to S570 for the newly selected second vehicle.

If the wireless charging termination acceptance message has been received, the procedure proceeds again to the step S530 of FIG. 5. That is, the controller of the wireless charging management server 1100 may transmit a wireless charging acceptance message to the first vehicle (S530). Additionally, the controller of the wireless charging management server 1100 may initiate a wireless charging procedure with the first vehicle (S530).

Referring to FIGS. 5 and 6, the procedures of FIGS. 5 and 6 are shown to be completed only when a wireless charging acceptance message is transmitted to the first vehicle and the wireless charging procedure is initiated. However, when a wireless charging termination rejection message is received N times (where 'N' is an integer of 1 or greater) from the second vehicle, the proposed procedure may be terminated. Alternatively, in a situation where the wireless charging termination request message is transmitted N times, when the wireless charging termination acceptance message is not received, the proposed procedure may be terminated.

FIG. 5 is a flowchart illustrating a method for controlling wireless charging of the vehicle according to the proposed technology.

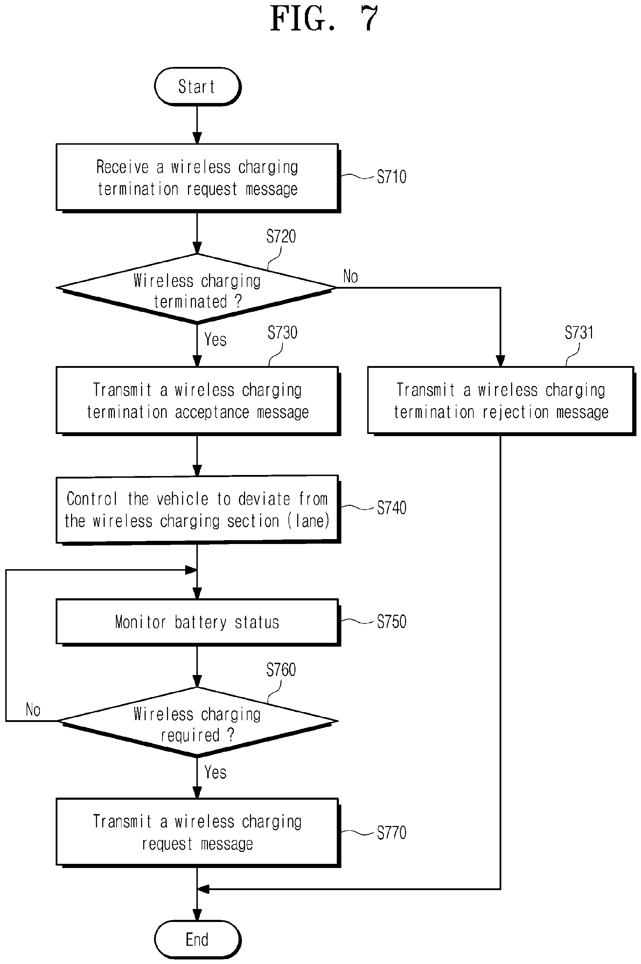

The operation according to the flowchart of FIG. 7 may be performed by the vehicle 1000 or components (e.g., a controller, a processor, etc.) of the vehicle 1000, but is not limited thereto. The flowchart of FIG. 7 relates to procedures to be performed by the second vehicle.

The controller of the vehicle 1000 may receive a wireless charging termination request message (S710).

The controller of the vehicle 1000 may determine whether to terminate wireless charging of the vehicle 1000 according to the received wireless charging termination request message (S720). The controller of the vehicle 1000 may determine whether to terminate wireless charging of the vehicle 1000 based on the priority criterion. In this case, the priority criterion may be determined based on at least one of the vehicle's battery charging state, the vehicle's scheduled driving route, the vehicle's residual route, and a wireless charging rating assigned to the vehicle.

If the controller of the vehicle 1000 determines that wireless charging of the vehicle that is driving on the road may be terminated, the controller may transmit a wireless charging termination acceptance message (S730). Otherwise, the controller of the vehicle 1000 may transmit a wireless charging termination rejection message (S731).

The controller of the vehicle 1000 may control the driving vehicle 1000 to deviate from the unit section for wireless charging (S740). For example, if the unit section for wireless charging is a specific lane on the road, the vehicle 1000 can perform lane change so that the vehicle 1000 can move from a current lane to another lane.

Then, the controller of the vehicle 1000 may monitor the battery status of the vehicle 1000 (S750). The step S750 comprises attempting wireless charging again when wireless charging is needed.

The controller of the vehicle 1000 may determine whether wireless charging is necessary based on the battery status (S760). If it is determined that wireless charging is necessary, the controller of the vehicle 1000 may transmit a wireless charging request message (S770). The subsequent procedure below step S770 is not shown, but referring to FIGS. 5 and 6, the following operations can be performed.

In FIGS. 5 and 6, until the controller of the vehicle 1000 receives the wireless charging acceptance message in response to the wireless charging request message and then restarts the wireless charging procedure, the wireless charging management server 1100 or the wireless charger 900 may perform the vehicle entry control operation for wireless charging.

Although the above-described embodiments of the present disclosure have disclosed that the device (or apparatus) for controlling a user interface (UI) and components included therein perform such control for convenience of description, the device (or apparatus) and the components belonging thereto are names only and the scope of rights is not dependent thereon.

In other words, the proposed technology of the present disclosure may be performed by devices having names other than the control device. In addition, the method, scheme, or the like described above may be performed by software or code readable by a computer or other machine or device for vehicle control.

In addition, as another aspect of the present disclosure, the operation of the proposed technology described above may be provided as code that may be implemented, realized, or executed by a "computer" (a generic concept including a system on chip (SoC) or a (micro) processor) or a computer-readable storage medium, a computer program product, or the like storing or containing the code. The scope of the present disclosure is extendable to the code or the computer-readable storage medium or the computer program product storing or containing the code.

Detailed descriptions of preferred embodiments of the present disclosure disclosed as described above have been provided such that those skilled in the art may implement and realize the present disclosure.

Although the present disclosure has been described above with reference to preferred embodiments, those skilled in the art will understand that various modifications and changes can be made to the present disclosure set forth in the claims below.

Accordingly, the present disclosure is not intended to be limited to the embodiments shown herein but is to be accorded the widest scope consistent with the principles and novel features disclosed herein.

As is apparent from the above description, the method and apparatus according to the embodiments of the present disclosure have the following effects.

The method and apparatus according to the embodiments of the present disclosure can efficiently manage wireless charging infrastructure. Supplying excessive wireless charging power may overload nearby power grids and may result in power outages. The method and apparatus according to the embodiments of the present disclosure may restrict the amount of power to be supplied to a vehicle through the wireless charging infrastructure.

The effects of the present disclosure are not limited to the effects described above. Other effects not described above can be understood by those skilled in the art from the description of the present disclosure below.

It will be apparent to those skilled in the art that various modifications and variations can be made in the present disclosure without departing from the spirit or scope of the disclosures. Thus, it is intended that the present disclosure covers the modifications and variations of this disclosure provided they come within the scope of the appended claims and their equivalents.

## Claims

1. An apparatus for controlling wireless charging, the apparatus comprising:
a transceiver configured to communicate with at least one of a power grid, one or more vehicles, or a combination thereof; and
a controller configured to:
control the transceiver;
obtain information on available power and information on estimated power consumption per unit section required for wireless charging;
calculate accommodatable number of wireless charging vehicles per unit section based on the obtained information; and
control wireless charging vehicles to move to the unit section for wireless charging while driving according to the calculated accommodatable number of wireless charging vehicle.

2. A method for controlling wireless charging, the method comprising:
obtaining information on available power and information on estimated power consumption per unit section for wireless charging;
calculating accommodatable number of wireless charging vehicles per unit section based on the obtained information; and
controlling wireless charging vehicles to move to the unit section for wireless charging while driving according to the calculated accommodatable number of wireless charging vehicle.

3. An apparatus for controlling wireless charging, the apparatus comprising:
a transceiver configured to communicate with a power grid or a vehicle; and
a controller configured to:
control the transceiver;
receive a wireless charging request message from a first vehicle that has entered a wireless charging section;
in response to a reception of the wireless charging request message, determine whether to accommodate the first vehicle in an unit section that provides wireless charging while driving; and
transmit a wireless charging acceptance message to the first vehicle according to a determination to accommodate the first vehicle in the unit section.

4. The apparatus according to claim 3, wherein the unit section for wireless charging includes:
any one of a specific lane in a road where wireless charging is provided and a section having a preset length in the road.

5. The apparatus according to claim 3 or 4, wherein, in response to a determination not to accommodate the first vehicle in the unit section, the controller is further configured to:
select a second vehicle among at least one vehicle based on a battery charging state of the at least one vehicle being wirelessly charged in the unit section; and
transmit a wireless charging termination request message to the second vehicle.

6. The apparatus according to claim 5,
wherein the controller is further configured to select a second vehicle based on a priority criterion, and
wherein the priority criterion is determined based on at least one of a battery charging state of the vehicle, a scheduled driving route of the vehicle, a residual route of the vehicle, a wireless charging rating assigned to the vehicle, or any combination thereof.

7. The apparatus according to claim 5 or 6, wherein the controller is further configured to:
upon receiving a wireless charging termination acceptance message from the second vehicle, terminate a wireless charging session with the second vehicle; and
control the transceiver to transmit the wireless charging acceptance message to the first vehicle.

8. An apparatus for controlling wireless charging, the apparatus comprising:
a transceiver configured to communicate with a wireless charging management apparatus or a wireless charging management system; and
a controller configured to:
control the transceiver to receive a wireless charging termination request message while the vehicle is driving in a unit section for wireless charging;
determine whether to terminate the wireless charging in response to the received wireless charging termination request message; and
control the transceiver to transmit a wireless charging termination acceptance message based on a determination to terminate the wireless charging.

9. The apparatus according to claim 8,
wherein the controller is further configured to determine whether to terminate the wireless charging based on a priority criterion, and
wherein the priority criterion is determined based on at least one of a battery charge state of a vehicle, a scheduled driving route of the vehicle, a residual route of the vehicle, a wireless charging rating assigned to the vehicle, or any combination thereof.

10. The apparatus according to claim 8 or 9, wherein, after the transmission of the wireless charging termination acceptance message, the controller is further configured to control the vehicle to deviate from the unit section.

11. The apparatus according to any one of claims 8 to 10, wherein the wireless charging management system comprises:
a vehicle including a rechargeable battery;
a wireless charger including a plurality of wireless transmission coils buried under a road;
a power grid connected to the wireless charger; and
a wireless charging management server configured to wirelessly charge the rechargeable battery of the vehicle while the vehicle is driving on the road.

12. The apparatus according to claim 11,
wherein the power grid comprises at least one of a power transmission system, a power distribution system, a power generation system, of any combination thereof, and
wherein the power grid is configured to supply power to the wireless charger.

13. The apparatus according to any one of claims 8 to 12, wherein the unit section comprises any one of a specific lane in the road where wireless charging is provided and a section having a preset length in the road.
